# EUROPEAN PATENT SPECIFICATION

(11) **EP 4 004 423 B1**
(45) Date of publication and mention of the grant of the patent: **23.04.2025**
(21) Application number: 20847055.9
(22) Date of filing: 30.07.2020
(51) Int. Cl.: F16L 55/105, F16L 55/10, F16L 55/11, F16L 55/124

(54) **PIPE ISOLATION AND MONITORING SYSTEM**
SYSTEM ZUR ISOLIERUNG UND ÜBERWACHUNG VON ROHRLEITUNGEN
SYSTÈME DE SURVEILLANCE ET D'ISOLATION DE TUYAU

(30) Priority: 31.07.2019 US 201962880894 P
(43) Date of publication of application: 01.06.2022
(73) Proprietor: Team Industrial Services Inc., Sugar Land, TX 77478 (US)
(72) Inventor: EVANS, Oliver, Bryn, Sugar Land, TX 77478 (US)
(74) Representative: Barker Brettell LLP
(86) International application number: PCT/US2020/044191
(87) International publication number: WO 2021/022004

(56) References cited:
- US-A- 5 924 454
- US-A1- 2009 114 301
- US-A1- 2009 114 301
- US-A1- 2016 356 665
- US-A1- 2016 356 665
- US-A1- 2019 390 814
- US-B1- 6 539 777

## Description

### CROSS-REFERENCE TO RELATED APPLICATIONS

This application claims priority to U.S. Provisional Patent Application Serial No. 62880894, filed July 31, 2019, entitled "Pipe Isolation and Monitoring System,".

### FIELD

In general, the disclosure describes a pipe isolation and monitoring system for pipelines. The pipe isolation and monitoring system has a pipe isolation device used to seal a pipeline and a monitoring system to monitor operating conditions of the pipe isolation device locally and at remote sites and to provide information on operating conditions of the pipe isolation device.

### BACKGROUND

When performing pipeline maintenance or servicing, such as during hot tapping procedures, it is necessary to provide isolation of a "live" section of pipe. One such technique is use of a "double block and bleed" apparatus. As the term double block and bleed is known in the art, it refers to the setting of two seals in a pipe with a bleed port located therebetween. If fluid leaks past the first seal, it is contained by the second seal and forced to exit the pipe through the bleed port. The double block and bleed apparatus when in the engaged position in a pipeline blocks fluid flow past the pipe isolation device to isolate the pipeline downstream of the pipe isolation device. The pipe isolation device allows maintenance and other operations for the pipeline to be performed downstream of the pipe isolation device. US 5924454A1 concerns a pipeline isolation tool for plugging a pipeline at a predetermined location. US 2009/114301A1 concerns a double block and bleed plug.

What is needed is a pipeline isolation and monitoring system providing information on the operating conditions of the pipe isolation device that allows data for the operating conditions of the pipe isolation device to be monitored at a local site and/or a remote site.

### SUMMARY

According to a first aspect of the invention, there is provided a method of sealing and monitoring a pipeline according to appended claim 1. According to a second aspect of the invention, there is provided a pipe isolation and monitoring system according to appended claim 9. Preferable features of the invention are defined in the appended dependent claims. This summary is provided to introduce a selection of concepts that are further described below in the detailed description. However, many modifications are possible without materially departing from the teachings of this disclosure. Accordingly, such modifications are intended to be included within the scope of this disclosure as defined in the claims. This summary is not intended to identify key or essential features of the claimed subject matter, nor is it intended to be used as an aid in limited the scope of the claimed subject matter.

Devices and methods to isolate and monitor a pipeline are described herein. Embodiments include conveying a pipe isolation device into the inlet section of a pipe, the pipe isolation device having a carrier, a primary sealing head, and a secondary sealing head; engaging the pipe isolation device to block flow through the pipeline; and measuring data values with a plurality of sensors with a means for transmitting acquired data to at least one data acquisition device.

One or more embodiments may include the method of the preceding paragraph wherein the engaged pipe isolation device forms a live pipe zone sealed by the primary sealing head, an isolated zone disposed between the primary sealing head and the secondary sealing head, and a zero-energy zone disposed adjacent to the secondary sealing head.

The plurality of sensors comprise a live pipe zone sensor, an isolated zone sensor, and a zero-energy zone sensor.

One or more embodiments may include the method of any preceding paragraph wherein the data acquisition device is disposed locally to the pipe isolation device.

One or more embodiments may include the method of any preceding paragraph wherein the data acquisition device is connected to the sensors by a wired connection.

One or more embodiments may include the method of any preceding paragraph wherein the data acquisition device is disposed remotely from the pipe isolation device.

One or more embodiments may include the method of any preceding paragraph wherein the data acquisition device is communicatively coupled to at least one edge device.

One or more embodiments may include the method of any preceding paragraph wherein the data acquisition device is communicatively coupled to at least one edge device and the at least one edge device is communicatively coupled to at least one remote application.

One or more embodiments may include the method of any preceding paragraph wherein the data acquisition device comprises a processing unit to process the acquired data, a non-transitory memory to record the acquired data, and a user interface to display the acquired data.

One or more embodiments may include the method of any preceding paragraph wherein the acquired data is processed to determine if an operating condition of the pipe isolation device has reached a selected threshold.

One or more embodiments may include the method of any preceding paragraph wherein the data acquisition device triggers an action when the operating condition has met the selected threshold.

One or more embodiments may include the method of any preceding paragraph wherein the operating condition is a temperature of a fluid in an area of the pipeline.

One or more embodiments may include the method of any preceding paragraph wherein the operating condition is an error in the functioning of the pipe isolation device.

A system to isolate and monitor a pipeline is described generally herein. Embodiments include a carrier with a primary sealing head and a secondary sealing head, the primary sealing head and the secondary sealing head capable of creating a live zone, an isolated zone, and a zero-energy zone within a pipeline; a plurality of sensors configured to send acquired data; and at least one data acquisition device coupled to the plurality of sensors and configured to receive the acquired data.

One or more embodiments may include the system of any preceding paragraph wherein the data acquisition device is communicatively coupled to the plurality of sensors with wires.

One or more embodiments may include the system of any preceding paragraph wherein at least one edge device is communicatively coupled with the data acquisition device.

One or more embodiments may include the system of any preceding paragraph wherein the at least one data acquisition device processes the acquired data from a live pipe sensor, an isolated zone sensor, and a zero-energy zone sensor and stores the acquired data in a non-transitory memory.

One or more embodiments may include the system of any preceding paragraph wherein the at least one data acquisition device is at least one instrument communicatively coupled to the sensors and operable to upload to an information network, the at least one instrument with a user interface, a data acquisition component, and a data processing and store component.

One or more embodiments may include the system of any preceding paragraph wherein the data acquisition device is at least one instrument communicatively coupled to the sensors with a user interface, a data acquisition component, a data processing and store component, and the at least one instrument is operable to upload to a remote application with configuration and administration modules.

One or more embodiments may include the system of any preceding paragraph wherein the data acquisition device is configured to trigger an action if the acquired data meets a selected threshold.

### BRIEF DESCRIPTION OF THE FIGURES

Certain embodiments of the disclosure will hereafter be described with reference to the accompanying drawings, wherein like reference numerals denote like elements. It is emphasized that, in accordance with standard practice in the industry, various features are not drawn to scale. In fact, the dimensions of various features may be arbitrarily increased or reduced for clarity of discussion. It should be understood, however, that the accompanying figures illustrate the various implementations described herein and are not meant to limit the scope of various technologies described herein, and:
Figure 1 shows an illustration of an embodiment of a pipe isolation and monitoring system with a pipe isolation device in an engaged position in a pipeline of the present disclosure;
Figure 2 shows an illustration of an embodiment of a section view of the pipe isolation device in an engaged position in the pipeline and sensors of a monitoring system of the present disclosure;
Figure 3 shows an illustration of an embodiment of a section view of the pipe isolation device in a retracted position in the pipeline and the sensors of the monitoring system of the present disclosure;
Figure 4 shows an illustration of an embodiment of the monitoring system of the present disclosure; and
Figure 5 shows a flow chart of an embodiment of operating the pipe isolation and monitoring system of the present disclosure.

### DETAILED DESCRIPTION

In the following description, numerous details are set forth to provide an understanding of some embodiments of the present disclosure. It is to be understood that the following disclosure provides many different embodiments, or examples, for implementing different features of various embodiments. Specific examples of components and arrangements are described below to simplify the disclosure. These are, of course, merely examples and are not intended to be limiting. In addition, the disclosure may repeat reference numerals and/or letters in the various examples. This repetition is for the purpose of simplicity and clarity and does not in itself dictate a relationship between the various embodiments and/or configurations discussed. However, it will be understood by those of ordinary skill in the art that the system and/or methodology may be practiced without these details and that numerous variations or modifications from the described embodiments are possible. This description is not to be taken in a limiting sense, but rather made merely for the purpose of describing general principles of the implementations. The scope of the described implementations should be ascertained with reference to the issued claims.

Various terms as used herein are shown below. To the extent a term used in a claim is not defined below, it should be given the broadest definition skilled persons in the pertinent art have given that term as reflected in printed publications and issued patents at the time of filing.

As used herein, the terms "connect", "connection", "connected", "in connection with", and "connecting" are used to mean "in direct connection with" or "in connection with via one or more elements"; and the term "set" is used to mean "one element" or "more than one element". Further, the terms "couple", "coupling", "coupled", "coupled together", and "coupled with" are used to mean "directly coupled together" or "coupled together via one or more elements". As used herein, the terms "up" and "down"; "upper" and "lower"; "top" and "bottom"; and other like terms indicating relative positions to a given point or element are utilized to more clearly describe some elements.

The present disclosure generally relates to a pipe isolation and monitoring system for monitoring operating conditions of a pipe isolation device having multiple seals in a pipeline. The pipe isolation device may have a primary seal formed by primary sealing head and a secondary seal formed by a secondary sealing head. The pipe isolation device in an engaged position forms a live pipe zone on the pressurized side of the primary sealing head, an isolated, depressurized zone between the primary seal and the secondary seal, and a zero-energy zone adjacent to and downstream of the secondary sealing head.

A monitoring system is used to monitor operating conditions of the pipe isolation device. The monitoring system includes sensors to measure values or parameters of the live pipe zone, isolated zone, and the zero-energy zone. Acquired data based on values measured by the sensors may be sent and processed by the monitoring system locally and/or remotely. For example, the acquired data from the sensors may be sent and processed to a local site in the location of the pipe isolation device and/or to a remote location with a device for accessing and/or processing the acquired data using an information network. The acquired data may be processed to analyze any deviation from set operating conditions. The monitoring system may generate alarms on-site and/or at a remote site if the monitoring system determines that values from the zones being measured deviate from the set operating conditions. In addition, maintenance and inspection of the pipe isolation device may be scheduled by the monitoring system. This identification of deviations from the set operating conditions may be used to more effectively schedule maintenance and inspection of the pipe isolation device, and to provide alarms on the operating conditions of the pipe isolation device.

The pipe isolation and monitoring system of the present disclosure provides a system and method to achieve two or more seals inside the pipeline with the pipe isolation device and to monitor operating conditions of the pipe isolation device. The pressure in the space between the two seals or the isolated zone can be bled so that one seal is a primary seal and the other is a secondary backup seal. The pipe isolation device is set by traveling through a tapped access hole inside a fitting branch on the pipeline and product flow can continue through this fitting if a bypass line is set up.

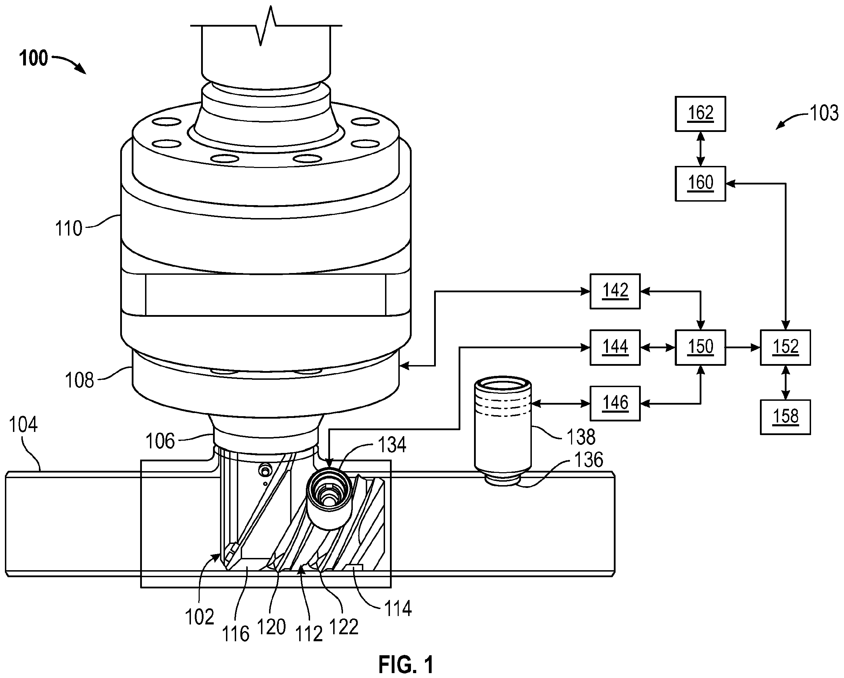

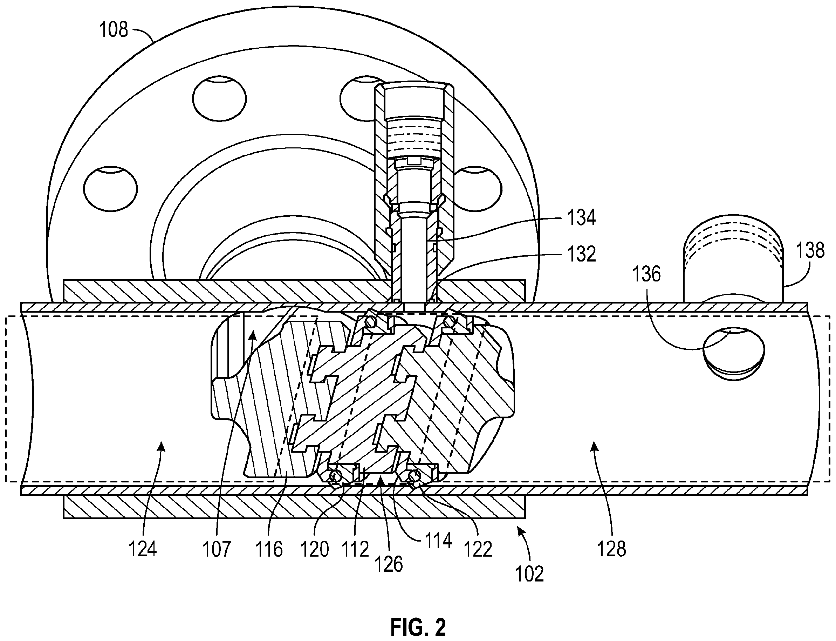

Figure 1 illustrates a pipe isolation and monitoring system 100 including a pipe isolation device 102 and a monitoring system 103 disposed in a pipeline 104, according to an embodiment of the present disclosure. Monitoring system 103 is configured to monitor operating conditions of the pipeline 104 and the pipe isolation device 102. An access connection to pipeline 104 is formed by an access fitting 106 disposed over a tapped access opening 107, shown in Figure 2, inside the access fitting 106. The access fitting 106 may include a mating flange 108 that is attached to an access housing 110.

Pipe isolation device 102 includes three main components: a primary sealing head 112, a secondary sealing head 114, and a control bar head 116. Control bar head 116 is a carrier for the sealing heads 112, 114 and is used to convey the sealing heads 112, 114. In the embodiment shown in Figure 1, the two sealing heads 112, 114 can slide with respect to each other, and with respect to the control bar head 116 to place the pipe isolation device 102 in an engaged position, as shown in Figure 1 and Figure 2. In other embodiments, pipe isolation devices 102 may have a primary sealing head and a secondary sealing head that pivot with respect to one another to position the pipe isolation device to the engaged position in the pipeline 104.

When the pipe isolation device 102 is in the engaged position shown in Figure 1 and Figure 2, the primary sealing head 112 provides a primary seal to fluid in the pipeline 104 and the secondary sealing head 114 provides a secondary seal to form an isolated zone 126 between the primary seal and the secondary seal. Any leakage of fluid past the primary seal flows into the isolated zone 126. Control bar head 116 is attached to a control bar of an actuator, typically hydraulically powered, and translates through the access fitting 106 and the access opening 107 of the pipeline 104. Primary sealing head 112 includes a primary seal element 120 and the secondary sealing head 114 includes a secondary seal element 122. Primary seal element 120 and secondary seal element 122 may be made from elastomeric materials.

Pipe isolation device 102 when in the engaged position establishes, as shown in Figure 2, three zones in the pipeline 104: a live pipe zone 124, the isolated zone 126, and a zero-energy zone 128. Live pipe zone 124 is on the pressurized side of the primary sealing head 112, the isolated zone 126 is between the primary sealing head 112 and the secondary sealing head 114, and zero-energy zone 128 is downstream of the secondary sealing head 114. Fluid that leaks past the primary seal element 120 flows into the isolated zone 126 and pressure from the fluid in the isolated zone 126 is bled out of the isolated zone 126.

Referring to Figure 1 and Figure 2, to bleed pressure from the isolation zone 126 between the two sealing heads 112, 114 when the pipe isolation device 102 is engaged, an embodiment of the present disclosure provides a bleed port 132 in the pipeline 104. Bleed port 132 extends through a wall of the pipeline 104 to form a passageway to the isolated zone 126 in the pipeline 104. A bleed joint 134 is formed over the bleed port 132. Bleed joint 134 may include a fitting, such as a valve. Bleed joint 134 may be formed by a T-joint over the bleed port 132.

In the embodiment shown in Figure 1 and Figure 2, the bleed joint 134 is fitted, and the pipeline 104 is tapped at the bleed port 132. In another embodiment of the present disclosure, an internal passageway is connected to a hose which leads to a port on the tool's housing (not shown). This internal passageway (not shown) passes through the primary sealing head 112 and into a port that goes through the control bar head 116 which then connects to the hose. The port (not shown) between the primary sealing head 112 and the control bar head 116 is only concentric once the pipe isolation device 102 is engaged. The port may be sealed with a face seal (not shown).

A zero-energy port 136 extends through a wall of the pipeline 104 to form a passageway to the zero-energy zone 128 in the pipeline 104. A zero-energy joint 138 is formed over the zero-energy port 136. Zero-energy joint 138 may include a fitting, such as a valve. Zero-energy joint 138 may be formed by a T-joint over the zero-energy port 136. In the embodiment shown in Figure 1 and Figure 2, a zero-energy joint 138 is fitted, and the pipeline 104 is tapped at the zero-energy port 136.

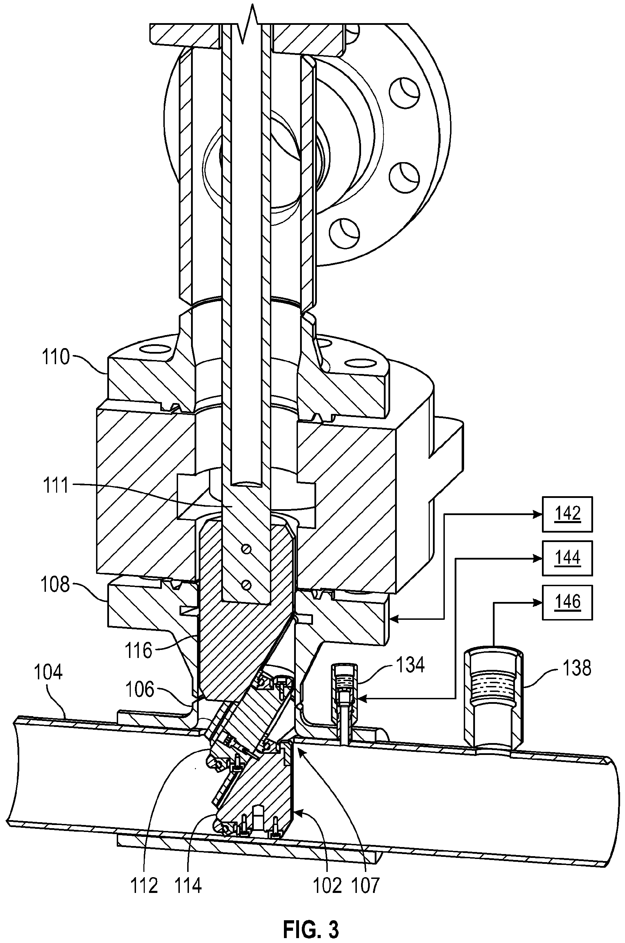

Referring to Figure 3, the pipe isolation device 102 is shown in a retracted position. More specifically, the pipe isolation device 102 is shown partially extended through the access opening 107 of the pipeline 104 with the primary sealing head 112 and secondary sealing head 114 in retracted positions. An actuator rod 111 forms a part of an actuator for positioning the pipeline isolation device 102 from outside the pipeline 104 and into the access opening 107 when in the retracted position. Actuator rod continues a downward movement to position the pipe isolation device 102 in the engaged position shown in Figure 1 and Figure 2.

Referring to Figures 1 - 3, monitoring system 103 includes a live pipe sensor 142, an isolated zone sensor 144, and a zero-energy zone sensor 146 for measuring operating conditions of the pipe isolation device 102, including pressure and temperature of the fluid from the live pipe zone 124, isolated zone 126, and zero-energy zone 128. Sensors 142, 144, 146 may each be comprised of multiple physical sensors. In some embodiments, a single sensor may monitor conditions in two zones, such as in the live pipe zone 124 and the isolated zone 126, in the isolated zone 126 and the zero-energy zone 128, or in the live pipe zone 124 and the zero-energy zone 128. In some embodiments, sensors 142, 144, 146 may measure fluid flow rate. Sensors 142, 144, 146 generate data or values corresponding to operating conditions being measured. The location of sensors 142,144,146 may be external to the zones 124, 126, 128. In some embodiments, sensors 142, 144, 146 may be integrated into the pipe isolation device 102. In some embodiments, ultrasonic sensors and a camera may be used with the pipe isolation device 102 and may be located on the primary sealing head 112 to detect obstructions in the pipeline 104. In some embodiments, a sensor for each sliding interface for the pipe isolation device 102 may be added to determine if deployment of the primary sealing head 112 and/or secondary sealing head 114 from a retracted position to a set position has begun and to confirm if the primary sealing head 112 and/or secondary sealing head 114 has reached the engaged or retracted position. In some embodiments, a sensor monitors flow rate through access fitting 106, bypass housing, and/or main line before and after pipe isolation device 102 is engaged.

The live pipe sensor 142 measures conditions of fluid in the live pipe zone 124. In some embodiments, the live pipe sensor 142 may measure pressure and temperature of fluid from the live pipe zone 124 that has flowed into the access fitting 106 and mating flange 108. Access fitting 106 and mating flange 108 are fluidly coupled to the live pipe zone 124 via access opening 107 in pipeline 104.

Isolated zone sensor 144 measures conditions of fluid in the isolated zone 126. In some embodiments, the isolated zone sensor 144 may measure pressure and temperature of fluid from the isolated zone 126 that has flowed into bleed joint 134.

Zero-energy zone sensor 146 measures conditions of fluid in the zero-energy zone 128. In some embodiments, the zero-energy zone sensor 146 may measure pressure and temperature of fluid from the zero-energy zone 128 that has flowed through the zero-energy port 136 into the zero-energy joint 138. In addition, the zero-energy zone sensor 146 may measure hydrocarbon gas levels and other gas levels in the zero-energy zone 128. In some embodiments, the zero-energy zone sensor may measure hydrocarbon gas level of fluid from the zero-energy zone 128. The monitoring system 103 may determine based on the data from the measured hydrocarbon gas level if the hydrocarbon gas level or other gas levels of the fluid in the zero-energy zone 128 has reached selected thresholds, including the lower explosive limit (LEL) for hydrocarbon gas. A selected threshold may be reached if an operating condition exceeds a selected value.

Sensors 142, 144, 146 may be selected to measure a range of pipeline pressures and temperature ranges. For example, the sensors may measure maximum allowable operating pressures and test pressures for the pipeline 104. Sensors 142, 144, 146 may be selected to comply with various standard setting and governmental bodies for various standards, including use of a component in a potentially explosive environment. In some embodiments, the sensors 142, 144, 146 may be installed or removed from standard NPT pipe thread and have fluid compatibility with crude oil, water, natural gas, and gasoline.

Referring to Figures 1 - 4, data acquisition device 150 is coupled to and acquires data from sensors 142, 144, 146. Data acquisition device 150 may be referred to as DAQ 150. Data acquisition device 150 may be locally positioned at the location of the pipe isolation device 102. In some embodiments, data acquisition device 150 may be installed locally on the pipeline 104. In some embodiments, data acquisition device 150 may record and monitor data acquired from the sensors 142, 144, 146. Data acquisition device 150 may have a processing unit for processing acquired data, a non-transitory memory for recording acquired data and other information, and a user interface, such as a human man interface (HMI) that may include a dashboard and/or screen. The HMI on the data acquisition device 150 may display values based on the acquired data from the sensors 142, 144, 146, including pressure, temperature, and other operating conditions of the zones 124, 126, and 128.

Data acquisition system 150 may determine based on the data from the sensors 142, 144, 146 if any condition value, including an operational condition, of fluid in one or more of the zones 124, 126, 128 has met selected thresholds. Selected thresholds may be met when a value reaches or exceeds the selected values. Data acquisition system 150 may identify errors including disconnection of one or more sensors 142, 144, 146 and improper working of the data acquisition system 150 and trigger an alarm when an error has been detected. Data acquisition device 150 is configured to notify its active status of monitoring sensors 142, 144, 146, including notification to an edge device 152 and/or a remote application 160, for example by sending a periodic message or "heartbeat" message to the edge device 152. Data acquisition system 150 may send a signal triggering or turning-on an alarm when a condition value has met the selected threshold, or an error has been detected by the data acquisition system 150. The alarm may be displayed on or audibly outputted by the HMI of the data acquisition device 150 or a device located remotely. Data acquisition device 150 may display charts and graphs based on the acquired data from sensors 142, 144, 146.

In some embodiments, sensors 142, 144, 146 may have a wired connection to the data acquisition device 150 and be configured to transmit acquired data to the data acquisition device 150 over the wired connection. Data acquisition device 150 may acquire data from multiple physical sensors forming each of the sensors 142, 144, 146. Each physical sensor may transmit data to the data acquisition device 150 over a separate communications channel. In some embodiments, data acquisition device 150 may be battery powered and the data acquisition device 150 may provide power management, including communicating battery status and power level via the HMI for the data acquisition device 150 and/or other device at a remote location. Battery power for the data acquisition device 150 may be used because no wired-powered sources may be available locally to provide wired power to the data acquisition device 150.

Data acquisition device 150 is configured to transmit acquired data from the sensors 142, 144, 146 and processed data from the data acquisition device 150 to a remote location. In some embodiments, data acquisition device 150 communicates to the remote location using the edge device 152 or Wi-Fi to connect to an information network, also referred to as the cloud 154. Edge device 152 may perform data processing of the sensor acquired data from sensors 142, 144, 146 or process other information based on the sensor acquired data. Edge device 152 may also include an annunciation system 156 providing information to users based on the sensor acquired data, including outputting on an annunciation display 158 alarms when values of the operating conditions meet selected threshold limits. Edge device 152 may include non-transitory memory for storing acquired data and/or monitoring data associated with the monitoring system 103. Acquired data may be uploaded to the cloud 154 by the edge device 152.

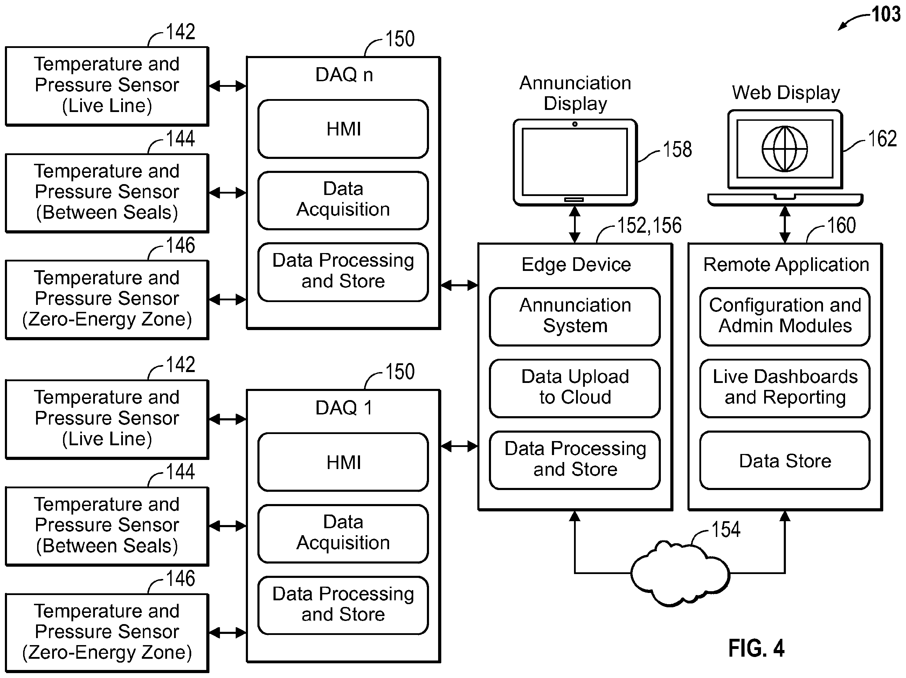

Multiple data acquisition devices 150 may be wirelessly coupled to the edge device 152, as shown in Figure 4. The pairing of a data acquisition device 150 with the edge device 152 may be configured with the remote application 160 via the web. Edge device 152 may act like an annunciation device and wirelessly communicate with various data acquisition devices 150 to display status of active alarms from all the data acquisition devices 150 paired with the edge device 152. Edge device 152 may upload data to the remote application 160 at a predefined frequency, and the edge device 152 may be connected to the web or other information network wirelessly, for example by a cellular or satellite connection. Edge device 152 may be battery powered and may include power management, including communicating the battery status.

Remote application 160 may be used to remotely store acquired data and other monitoring data associated with the pipe isolation and monitoring system 100 in a cloud server and/or other non-transitory memory. Remote application 160 provides for data storage of acquired data and other monitoring data and generates live dashboards and reporting based on the data. Remote application 160 may include configuration and administration modules for managing and controlling the monitoring system 103, and a web display 162 may access and use the remote application 160. The configuration module may be used to manage inventories of data acquisition devices 150, edge devices 152, and the pairing of data acquisition devices 150 and edge devices 152. The configuration module may create job configurations, assign digital acquisition devices and download configurations. The configuration module may enable a user to tag a job with a project number, list parameters for a project, and identify data acquisition devices 150 to be used for the project. For each data acquisition device 150, the configuration module may enable a user to specify active channels and the type of data for each channel, frequency of data capture and upload, and operating ranges per sensor. Remote application 160 may be configured to allow a user to view the live status of the currently running jobs showing operating conditions for one or more pipe isolation devices 102 and associated values by selecting a job-number, and to view historical reports of various jobs.

Data acquisition device 150 may be able to download settings and configurations from the remote application 160 via the Web using a Web browser or other connection to an information network. Data acquisition device 150 and/or remote application 160 may continuously record and monitor sensor acquired data and other monitoring data. Configuration and administration modules may be used to control the frequency of recording and monitoring sensor acquired data and other monitoring data.

Data may be analyzed using the data acquisition device 150 and/or other device using the remote application 160 for any deviation from the set operating conditions and generate alarms locally on the data acquisition device 150 and/or locally on an annunciation device to warn users at the location of the pipe isolation device 102, and generate alarms to remote locations, such as the web display 162, via a web-interface or other network connection.

Reports may be generated by the data acquisition device 150 and/or remote application 160. The remote application 160 may be accessed by remote devices to generate reports. The reports may include past data analyses for selected time periods and for one or more data acquisition devices 150. The reports may be per job. The reports may be generated and/or reviewed remotely via the web-interface or internet connection to a remote device, for example a web display 162.

Remote application 160 may include other modules including: User Management to Add/ Update/ Delete Users and Add/ Update/ Delete User Permissions; Inventory Management to Add/ Update/ Delete DAQs, Add/ Update/ Delete Edge, and Base settings for DAQs and Edge; Download settings on DAQs and Edge; View Status of DAQs and Edge for Heartbeat, System utilization, Memory utilization, and Active channels.

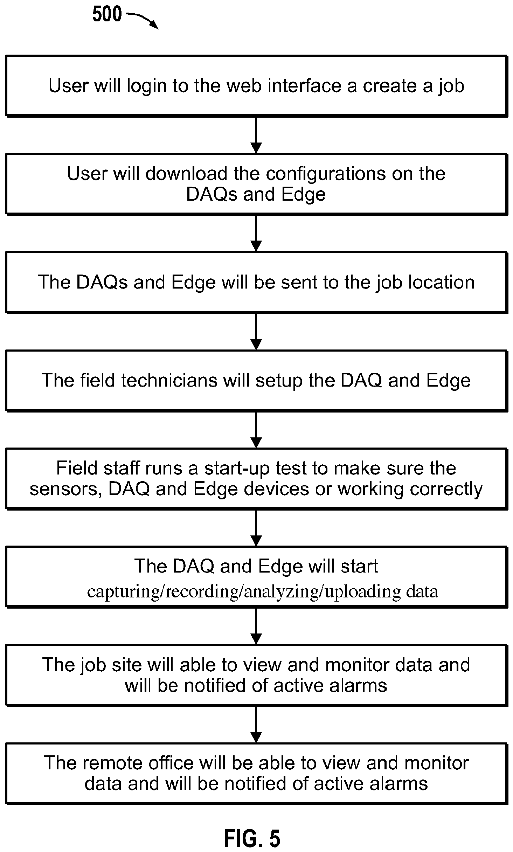

In operation, the monitoring system 103 may provide in some embodiments a monitoring operation 500 as described in a flow chart shown in Figure 5. In some embodiments, a user may login to a web interface to create a job. This web interface may be connected to a remote application with administration and configuration modules. The user may then download the configurations on the DAQs and Edge. The DAQs and Edge configurations may then be sent to the job location, where field technicians may setup the DAQ and Edge. Field technicians may then run a startup test to make sure the sensors, DAQ, and Edge devices are working correctly. When the pipe monitoring device is activated, then the DAQ and Edge will start capturing, recording, analyzing, and uploading acquired data. In some embodiments, the monitoring system allows users at the job site to view and monitor acquired data and be notified of any active alarms. In some embodiments, office personnel at a remote location may view and monitor the data and be notified of any active alarms. In some embodiments, users at the job site and office personnel at a remote location may simultaneously view and monitor the data and be notified of any active alarms. In some embodiments, the monitoring system may initiate or trigger an action in response to an operating condition reaching a selected threshold, for example, scheduling maintenance and/or inspection of the pipe monitoring device or performing an activity within the pipe monitoring system and/or pipeline.

Although a few embodiments of the disclosure have been described in detail above, those of ordinary skill in the art will readily appreciate that many modifications are possible without materially departing from the teachings of this disclosure. For example, the pipe isolation device 100 of the present disclosure may be modified by adding additional sealing heads to become a triple, or more, block and bleed apparatus. Accordingly, such modifications are intended to be included within the scope of this disclosure as defined in the claims. The scope of the invention should be determined only by the language of the claims that follow. The term "comprising" within the claims is intended to mean "including at least" such that the recited listing of elements in a claim are an open group. The terms "a," "an" and other singular terms are intended to include the plural forms thereof unless specifically excluded. In the claims, means-plus-function clauses are intended to cover the structures described herein as performing the recited function and not only structural equivalents, but also equivalent structures. It is the express intention of the applicant not to invoke 35 U.S.C. § 112, paragraph 6 for any limitations of any of the claims herein, except for those in which the claim expressly uses the words "means for" together with an associated function.

## Claims

1. A method of sealing and monitoring a pipeline (104), comprising:
conveying a pipe isolation device (102) into the inlet section of a pipe, the pipe isolation device (102) having a carrier (116), a primary sealing head (112), and a secondary sealing head (114);
engaging the pipe isolation device (102) to block flow through the pipeline (104), wherein engaging the pipe isolation device (102) forms a live pipe zone (124) disposed on a pressurized side of the primary sealing head (112), an isolated zone (126) disposed between the primary sealing head (112) and the secondary sealing head (114), and a zero-energy zone (128) disposed on a downstream side of the secondary sealing head (114); and
measuring data values with a plurality of sensors with a means for transmitting acquired data to at least one data acquisition device (150), wherein the plurality of sensors comprise a live pipe zone sensor (142) configured to measure conditions of fluid in the live pipe zone (124), an isolated zone sensor (144) configured to measure conditions of fluid in the isolated zone (126), and a zero-energy zone sensor (146) configured to measure conditions of fluid in the zero-energy zone (128).

2. The method of claim 1, wherein the at least one data acquisition device (150) is disposed locally to the pipe isolation device (102).

3. The method of claim 1, wherein the at least one data acquisition device (150) is communicatively coupled to at least one edge device (152), and wherein the at least one data acquisition device (150) is connected to the plurality of sensors by a wired connection.

4. The method of claim 1, wherein the at least one data acquisition device (150) is disposed remotely from the pipe isolation device (102).

5. The method of claim 1, wherein the at least one data acquisition device (150) is communicatively coupled to at least one edge device (152) and the at least one edge device (152) is communicatively coupled to at least one remote application (160).

6. The method of claim 1, wherein the at least one data acquisition device (150) comprises a processing unit to process the acquired data, a non-transitory memory to record the acquired data, and a user interface to display the acquired data.

7. The method of claim 1, further comprising processing the acquired data to determine if an operating condition of the pipe isolation device (102) has reached a selected threshold, and optionally or preferably
wherein the at least one data acquisition (150) device triggers an action when the operating condition has met the selected threshold, and wherein
(i) the operating condition is a temperature of a fluid in an area of the pipeline (104), or
(ii) the operating condition is an error in the functioning of the pipe isolation device (102).

8. The method of claim 1, wherein:
the carrier (116), the primary sealing head (112), and the secondary sealing head (114) slide with respect to one another; and
engaging the pipe isolation device (102) to block flow through the pipeline (104) comprises an actuator rod (111) translating the carrier (116) to slide with respect to the primary sealing head (112) and the secondary sealing head (114) to place the pipe isolation device (102) into an engaged position.

9. A pipe isolation and monitoring system (103) for a pipeline (104), comprising:
a carrier (116) with a primary sealing head (112) and a secondary sealing head (114), the primary sealing head (112) and the secondary sealing head (114) capable of creating a live pipe zone (124), an isolated zone (126) disposed between the primary sealing head (112) and the secondary sealing head (114), and a zero-energy zone (128) within a pipeline (104);
a plurality of sensors configured to send acquired data, wherein the plurality of sensors comprise a live pipe zone sensor (142) configured to measure conditions of fluid in the live pipe zone (124), an isolated zone sensor (146) configured to measure conditions of fluid in the isolated zone (126), and a zero-energy zone sensor (148) configured to measure conditions of fluid in the zero-energy zone (128); and
at least one data acquisition device (150) coupled to the plurality of sensor and configured to receive the acquired data.

10. The system of claim 9, wherein the at least one data acquisition device (150) comprises at least one instrument communicatively coupled to the sensors and operable to upload to an information network, the at least one instrument with a user interface, a data acquisition component, and a data processing and store component.

11. The system of claim 9, wherein the at least one data acquisition device (150) comprises at least one instrument communicatively coupled to the sensors with a user interface, a data acquisition component, and a data processing and store component, and the at least one instrument is operable to upload to a remote application with configuration and administration modules.

12. The system of claim 9, further comprising at least one edge device (152) communicatively coupled with the at least one data acquisition device (150), wherein the at least one data acquisition device (150) is communicatively coupled to the plurality of sensors with wires.

13. The system of claim 9, wherein:
(i) the at least one data acquisition device (150) processes the acquired data from the live pipe zone sensor (142), the isolated zone sensor (146), and the zero-energy zone sensor (148) and stores the acquired data in a non-transitory memory, or
(ii) the at least one data acquisition device (150) is configured to trigger an action if the acquired data meets a selected threshold.

14. The system of claim 9, wherein:
the carrier (116), the primary sealing head (112), and the secondary sealing head (114) slide with respect to one another; and
the primary sealing head (112) and the secondary sealing head (114) are placed in an engaged position when the carrier (116), the primary sealing head (112), and the secondary sealing head (114) slide with respect to one another.

## Patentansprüche

1. Verfahren zum Abdichten und Überwachen einer Rohrleitung (104), umfassend:
Einbringen einer Rohrisoliervorrichtung (102) in den Einlassabschnitt eines Rohrs, wobei die Rohrisoliervorrichtung (102) einen Träger (116), einen primären Dichtungskopf (112) und einen sekundären Dichtungskopf (114) aufweist;
In-Eingriff-Bringen der Rohrisoliervorrichtung (102), um den Durchfluss durch die Rohrleitung (104) zu blockieren, wobei durch das In-Eingriff-Bringen der Rohrisoliervorrichtung (102) eine aktive Rohrzone (124), die auf einer unter Druck stehenden Seite des primären Dichtungskopfes (112) angeordnet ist, eine isolierte Zone (126), die zwischen dem primären Dichtungskopf (112) und dem sekundären Dichtungskopf (114) angeordnet ist, und eine Null-Energie-Zone (128), die auf einer stromabwärts gelegenen Seite des sekundären Dichtungskopfes (114) angeordnet ist, gebildet werden; und
Messen von Datenwerten mit einer Vielzahl von Sensoren mit einer Einrichtung zum Übertragen der erfassten Daten an mindestens eine Datenerfassungsvorrichtung (150), wobei die Vielzahl von Sensoren einen Sensor (142) für die aktive Rohrzone, der konfiguriert ist, um Bedingungen des Fluids in der aktiven Rohrzone (124) zu messen, einen Sensor (144) für die isolierte Zone, der konfiguriert ist, um die Bedingungen von Fluid in der isolierten Zone (126) zu messen, und einen Sensor (146) für die Nullenergiezone, der konfiguriert ist, um die Bedingungen von Fluid in der Null-Energie-Zone (128) zu messen, umfasst.

2. Verfahren nach Anspruch 1, wobei die mindestens eine Datenerfassungsvorrichtung (150) lokal an der Rohrisoliervorrichtung (102) angeordnet ist.

3. Verfahren nach Anspruch 1, wobei die mindestens eine Datenerfassungsvorrichtung (150) kommunikativ mit mindestens einer Kantenvorrichtung (152) gekoppelt ist, und wobei die mindestens eine Datenerfassungsvorrichtung (150) über eine Kabelverbindung mit der Vielzahl von Sensoren verbunden ist.

4. Verfahren nach Anspruch 1, wobei die mindestens eine Datenerfassungsvorrichtung (150) entfernt von der Rohrisoliervorrichtung (102) angeordnet ist.

5. Verfahren nach Anspruch 1, wobei die mindestens eine Datenerfassungsvorrichtung (150) kommunikativ mit mindestens einer Kantenvorrichtung (152) gekoppelt ist und die mindestens eine Kantenvorrichtung (152) kommunikativ mit mindestens einer Fernanwendung (160) gekoppelt ist.

6. Verfahren nach Anspruch 1, wobei die mindestens eine Datenerfassungsvorrichtung (150) eine Verarbeitungseinheit zum Verarbeiten der erfassten Daten, einen nichtflüchtigen Speicher zum Aufzeichnen der erfassten Daten und eine Benutzerschnittstelle zum Anzeigen der erfassten Daten umfasst.

7. Verfahren nach Anspruch 1, weiter umfassend Verarbeiten der erfassten Daten, um zu bestimmen, ob ein Betriebszustand der Rohrisoliervorrichtung (102) einen ausgewählten Schwellenwert erreicht hat, und optional oder vorzugsweise
wobei die mindestens eine Datenerfassungsvorrichtung (150) eine Aktion auslöst, wenn der Betriebszustand den ausgewählten Schwellenwert erreicht hat, und wobei
(i) der Betriebszustand eine Temperatur einer Flüssigkeit in einem Bereich der Rohrleitung (104) ist, oder
(ii) der Betriebszustand ein Fehler in der Funktion der Vorrichtung zur Rohrisoliervorrichtung (102) ist.

8. Verfahren nach Anspruch 1, wobei:
der Träger (116), der primäre Dichtungskopf (112) und der sekundäre Dichtungskopf (114) in Bezug zueinander gleiten; und
In-Eingriff-Bringen der Rohrisoliervorrichtung (102), um den Durchfluss durch die Rohrleitung (104) zu blockieren, eine Betätigungsstange (111), die den Träger (116) verschiebt, um in Bezug auf den primären Dichtungskopf (112) und den sekundären Dichtungskopf (114) zu gleiten, um die Rohrisoliervorrichtung (102) in eine Eingriffsposition zu bringen, umfasst.

9. System zur Isolierung und Überwachung von Rohrleitungen (103) für eine Rohrleitung (104), umfassend:
einen Träger (116) mit einem primären Dichtungskopf (112) und einem sekundären Dichtungskopf (114), wobei der primäre Dichtungskopf (112) und der sekundäre Dichtungskopf (114) in der Lage sind, eine aktive Rohrzone (124), eine isolierte Zone (126), die zwischen dem primären Dichtungskopf (112) und dem sekundären Dichtungskopf (114) angeordnet ist, und eine Null-Energie-Zone (128) innerhalb einer Rohrleitung (104) zu erzeugen;
eine Vielzahl von Sensoren, die konfiguriert sind, um erfasste Daten zu senden, wobei die Vielzahl von Sensoren einen Sensor (142) für die aktive Rohrzone, der konfiguriert ist, um die Bedingungen des Fluids in der aktiven Rohrzone (124) zu messen, einen Sensor (146) für die isolierte Zone, der konfiguriert ist, um die Bedingungen des Fluids in der isolierten Zone (126) zu messen, und einen Sensor (148) für die Null-Energie-Zone, der konfiguriert ist, um Bedingungen des Fluids in der Null-Energie-Zone (128) zu messen, umfasst; und
mindestens eine Datenerfassungsvorrichtung (150), die mit der Vielzahl von Sensoren gekoppelt ist und konfiguriert ist, um die erfassten Daten zu empfangen.

10. System nach Anspruch 9, wobei die mindestens eine Datenerfassungsvorrichtung (150) mindestens ein Instrument umfasst, das kommunikativ mit den Sensoren gekoppelt ist und zum Hochladen in ein Informationsnetzwerk betrieben werden kann, wobei das mindestens eine Instrument eine Benutzerschnittstelle, eine Komponente zur Datenerfassung und eine Komponente zur Datenverarbeitung und -speicherung aufweist.

11. System nach Anspruch 9, wobei die mindestens eine Datenerfassungsvorrichtung (150) mindestens ein kommunikativ mit den Sensoren gekoppeltes Instrument mit einer Benutzerschnittstelle, einer Datenerfassungskomponente und einer Datenverarbeitungs- und Speicherkomponente umfasst und das mindestens eine Instrument so betreibbar ist, dass es Daten in eine Fernanwendung mit Konfigurations- und Verwaltungsmodulen hochlädt.

12. System nach Anspruch 9, weiter umfassend mindestens eine Kantenvorrichtung (152), die kommunikativ mit der mindestens einen Datenerfassungsvorrichtung (150) gekoppelt ist, wobei die mindestens eine Datenerfassungsvorrichtung (150) über Kabel mit der Vielzahl von Sensoren verbunden ist.

13. System nach Anspruch 9, wobei:
(i) die mindestens eine Datenerfassungsvorrichtung (150) die erfassten Daten vom Sensor (142) für die aktive Rohrzone, dem Sensor (146) für die isolierte Zone und dem Sensor (148) für den Null-Energie-Bereich verarbeitet und die erfassten Daten in einem nichtflüchtigen Speicher speichert, oder
(ii) die mindestens eine Datenerfassungsvorrichtung (150) konfiguriert ist, um eine Aktion auszulösen, wenn die erfassten Daten einen ausgewählten Schwellenwert erreichen.

14. System nach Anspruch 9, wobei:
der Träger (116), der primäre Dichtungskopf (112) und der sekundäre Dichtungskopf (114) in Bezug zueinander gleiten; und
der primäre Dichtungskopf (112) und der sekundäre Dichtungskopf (114) in eine Eingriffsposition gebracht werden, wenn der Träger (116), der primäre Dichtungskopf (112) und der sekundäre Dichtungskopf (114) in Bezug zueinander gleiten.

## Revendications

1. Procédé d'étanchéité et de surveillance d'une canalisation (104), comprenant :
le transport d'un dispositif d'isolation de tuyau (102) dans la section d'entrée d'un tuyau, le dispositif d'isolation de tuyau (102) présentant un support (116), une tête d'étanchéité primaire (112) et une tête d'étanchéité secondaire (114) ;
la mise en prise du dispositif d'isolation de tuyau (102) pour bloquer un écoulement à travers la canalisation (104), dans lequel la mise en prise du dispositif d'isolation de tuyau (102) forme une zone de tuyau sous tension (124) disposée sur un côté sous pression de la tête d'étanchéité primaire (112), une zone isolée (126) disposée entre la tête d'étanchéité primaire (112) et la tête d'étanchéité secondaire (114), et une zone à énergie nulle (128) disposée sur un côté aval de la tête d'étanchéité secondaire (114) ; et
la mesure de valeurs de données avec une pluralité de capteurs avec un moyen de transmission de données acquises à au moins un dispositif d'acquisition de données (150), dans lequel la pluralité de capteurs comprend un capteur de zone de tuyau sous tension (142) configuré pour mesurer des conditions de fluide dans la zone de tuyau sous tension (124), un capteur de zone isolée (144) configuré pour mesurer les conditions de fluide dans la zone isolée (126), et un capteur de zone à énergie nulle (146) configuré pour mesurer des conditions de fluide dans la zone à énergie nulle (128).

2. Procédé selon la revendication 1, dans lequel l'au moins un dispositif d'acquisition de données (150) est disposé localement sur le dispositif d'isolation de tuyau (102).

3. Procédé selon la revendication 1, dans lequel l'au moins un dispositif d'acquisition de données (150) est couplé en communication à au moins un dispositif d'accès (152), et dans lequel l'au moins un dispositif d'acquisition de données (150) est connecté à la pluralité de capteurs par une connexion câblée.

4. Procédé selon la revendication 1, dans lequel l'au moins un dispositif d'acquisition de données (150) est disposé à distance du dispositif d'isolation de tuyau (102).

5. Procédé selon la revendication 1, dans lequel l'au moins un dispositif d'acquisition de données (150) est couplé en communication à au moins un dispositif d'accès (152) et l'au moins un dispositif d'accès (152) est couplé en communication à au moins une application distante (160).

6. Procédé selon la revendication 1, dans lequel l'au moins un dispositif d'acquisition de données (150) comprend une unité de traitement pour traiter les données acquises, une mémoire non transitoire pour enregistrer les données acquises, et une interface utilisateur pour afficher les données acquises.

7. Procédé selon la revendication 1, comprenant en outre le traitement des données acquises pour déterminer si une condition opérationnelle du dispositif d'isolation de tuyau (102) a atteint un seuil sélectionné, et facultativement ou préférentiellement
dans lequel l'au moins un dispositif d'acquisition de données (150) déclenche une action lorsque la condition opérationnelle a atteint le seuil sélectionné, et dans lequel
(i) la condition opérationnelle est une température d'un fluide dans une zone de la canalisation (104), ou
(ii) la condition opérationnelle est une erreur dans le fonctionnement du dispositif d'isolement de tuyau (102).

8. Procédé selon la revendication 1, dans lequel :
le support (116), la tête d'étanchéité primaire (112), et la tête d'étanchéité secondaire (114) coulissent les uns par rapport aux autres ; et
la mise en prise du dispositif d'isolation de tuyau (102) pour bloquer un écoulement à travers la canalisation (104) comprend une tige d'actionneur (111) translatant le support (116) pour son coulissement par rapport à la tête d'étanchéité primaire (112) et à la tête d'étanchéité secondaire (114) pour placer le dispositif d'isolation de tuyau (102) dans une position en prise.

9. Système d'isolation et de surveillance de tuyau (103) pour une canalisation (104), comprenant :
un support (116) doté d'une tête d'étanchéité primaire (112) et d'une tête d'étanchéité secondaire (114), la tête d'étanchéité primaire (112) et la tête d'étanchéité secondaire (114) étant aptes à créer une zone de tuyau sous tension (124), une zone isolée (126) disposée entre la tête d'étanchéité primaire (112) et la tête d'étanchéité secondaire (114), et une zone à énergie nulle (128) à l'intérieur d'une canalisation (104) ;
une pluralité de capteurs configurés pour envoyer des données acquises, dans lequel la pluralité de capteurs comprend un capteur de zone de tuyau sous tension (142) configuré pour mesurer des conditions de fluide dans la zone de tuyau sous tension (124), un capteur de zone isolée (146) configuré pour mesurer des conditions de fluide dans la zone isolée (126), et un capteur de zone à énergie nulle (148) configuré pour mesurer des conditions de fluide dans la zone à énergie nulle (128) ; et
au moins un dispositif d'acquisition de données (150) couplé à la pluralité de capteurs et configuré pour recevoir les données acquises.

10. Système selon la revendication 9, dans lequel l'au moins un dispositif d'acquisition de données (150) comprend au moins un instrument couplé en communication aux capteurs et pouvant être téléchargé sur un réseau d'informations, l'au moins un instrument étant doté d'une interface utilisateur, d'un composant d'acquisition de données et d'un composant de traitement et de stockage de données.

11. Système selon la revendication 9, dans lequel l'au moins un dispositif d'acquisition de données (150) comprend au moins un instrument couplé en communication aux capteurs avec une interface utilisateur, un composant d'acquisition de données et un composant de traitement et de stockage de données, et l'au moins un instrument peut être téléchargé sur une application distante avec des modules de configuration et d'administration.

12. Système selon la revendication 9, comprenant en outre au moins un dispositif d'accès (152) couplé en communication à l'au moins un dispositif d'acquisition de données (150), dans lequel l'au moins un dispositif d'acquisition de données (150) est couplé en communication à la pluralité de capteurs avec des fils.

13. Système selon la revendication 9, dans lequel :
(i) l'au moins un dispositif d'acquisition de données (150) traite les données acquises à partir du capteur de zone de conduite sous tension (142), du capteur de zone isolée (146) et du capteur de zone à énergie nulle (148) et stocke les données acquises dans une mémoire non transitoire, ou
(ii) l'au moins un dispositif d'acquisition de données (150) est configuré pour déclencher une action si les données acquises atteignent un seuil sélectionné.

14. Système selon la revendication 9, dans lequel :
le support (116), la tête d'étanchéité primaire (112), et la tête d'étanchéité secondaire (114) coulissent les uns par rapport aux autres ; et
la tête d'étanchéité primaire (112) et la tête d'étanchéité secondaire (114) sont placées dans une position en prise lorsque le support (116), la tête d'étanchéité primaire (112), et la tête d'étanchéité secondaire (114) coulissent les uns par rapport aux autres.
